# FASCICULE DE BREVET EUROPEEN

(11) **EP 2 922 328 B1**
(45) Date de publication et mention de la délivrance du brevet: **18.02.2026**
(21) Numéro de dépôt: 15159915.6
(22) Date de dépôt: 19.03.2015
(51) Int. Cl.: H04W 12/08, H04W 12/37, H04L 9/40, H04W 12/61, H04W 84/12

(54) **ACCÈS TEMPORAIRE CONTRÔLÉ À UN RÉSEAU LOCAL**
KONTROLLIERTER TEMPORÄRER ZUGANG ZU EINEM LOKALEN NETZ
CONTROLLED TEMPORARY ACCESS TO A LOCAL AREA NETWORK

(30) Priorité: 21.03.2014 FR 1452420
(43) Date de publication de la demande: 23.09.2015
(73) Titulaire: Orange, 92130 Issy-les-Moulineaux (FR)
(72) Inventeur: GOSSELIN, Thomas, 92350 LE PLESSIS ROBINSON (FR); DEL MISSIER, Cyril, 92250 LA GARENNE COLOMBES (FR)

(56) Documents cités:
- EP-A1- 2 675 130
- EP-A2- 2 608 447
- US-A1- 2008 072 292
- US-A1- 2008 141 348
- US-A1- 2012 210 011

## Description

La présente invention concerne le domaine des télécommunications via un réseau local.

Elle concerne plus particulièrement l'accessibilité pour un terminal visiteur à un réseau local, notamment sans fil, établi par exemple par une passerelle domestique (dite « box » usuellement).

Il est actuellement possible de connecter un terminal visiteur sur le réseau domestique en lui communiquant une clé de sécurité (par exemple une clé WEP pour une connexion Wifi à la passerelle - WEP pour « Wired Equivalent Privacy »). Le terminal visiteur a alors accès de manière non contrôlée et infinie à de nombreuses applications telles que l'accès à Internet et le partage de fichiers multimédias en mode point à point, ainsi qu'à l'ensemble des terminaux (et des fichiers qu'ils stockent) connectés au réseau domestique du propriétaire de la passerelle.

En effet, le propriétaire de la passerelle, une fois la clé de connexion fournie, ne peut plus empêcher le terminal visiteur d'accéder à toutes les ressources partagées sur le réseau local (serveur de fichiers, autres terminaux du réseau, accès à et lecture de fichiers multimédias personnels du propriétaire avec par exemple une application de lecture de type « DLNA Media Renderer » - DLNA pour « Digital Living Network Alliance »).

En outre, le propriétaire de la passerelle est responsable des activités réalisées sur sa connexion à Internet (y compris celles entreprises par l'utilisateur du terminal visiteur). D'ailleurs, le terminal visiteur peut se reconnecter à la passerelle quand son utilisateur le souhaite et tant que le terminal visiteur est dans la portée de la liaison radiofréquence à la passerelle. Le propriétaire ne peut pas non plus décider de commander une coupure de l'accès à sa passerelle sans impacter l'ensemble de ses propres terminaux associés.

L'état de la techique est connue de par EP 2 608 447 A2 qui divulgue un point d'accès hébergeant une application de sécurité pour générer, administrer et révoquer des données d'authentification générées pour des dispositifs clients visiteurs.

La présente invention vient améliorer la situation.

La présente invention est définie par les revendications indépendantes. Des formes particulières de réalisation sont définies dans les revendications dépendantes.

Elle propose à cet effet un procédé (mis en œuvre par des moyens informatiques) de traitement d'une requête d'accès à une ou plusieurs applications disponibles sur un réseau local, dans lequel :
- un premier terminal est adapté pour donner accès au réseau local à un terminal visiteur émettant une requête d'accès à au moins une application sur le réseau local, le premier terminal étant une passerelle entre le réseau local et un réseau étendu,
- le premier terminal étant relié via le réseau local à un deuxième terminal, de confiance, à disposition d'un utilisateur habilité à donner une autorisation d'accès à ladite au moins une application,
- le deuxième terminal étant identifié par le premier terminal comme ayant des droits pour valider ou refuser une requête d'accès d'un terminal visiteur.

Le procédé comprend en particulier les étapes mises en œuvre par le premier terminal, suite à l'accès du terminal visiteur à un portail captif de la passerelle auquel lui donne accès le premier terminal sans saisie de clé :
- sur réception d'une requête d'accès à au moins une application sur le réseau local, le premier terminal vérifie la disponibilité de ladite au moins une application,
- transmet au deuxième terminal un premier message comportant au moins une information de requête d'accès à ladite au moins une application disponible sur le réseau local, et
- conditionner l'accès du terminal visiteur à ladite au moins une application requise sur le réseau local, à la réception d'un deuxième message, de retour, issu du deuxième terminal et comportant une information de validation de la requête, des données quant à ladite au moins une application autorisée et la durée pour laquelle l'accès à ladite au moins une application est autorisé.

On entend par « terminal visiteur » un terminal ne disposant pas de tous les droits d'usage du réseau local (par exemple un accès complet au réseau local et aux terminaux qui y sont connectés, et/ou un accès à un réseau étendu (Internet par exemple) via une passerelle du réseau local, etc.).

On entend par « terminal de confiance », un terminal qui est enregistré auprès du premier terminal comme étant à disposition d'un utilisateur habilité à accorder ou non les requêtes d'accès des terminaux visiteurs. Ainsi, le premier terminal se réfère à ce terminal de confiance pour donner ou non accès à l'application requise par le terminal visiteur.

On entend par le terme « application sur le réseau local » au moins la possibilité de se connecter déjà au réseau local, mais aussi éventuellement :
- l'accès à une mémoire par exemple d'un terminal connecté au réseau local (par exemple pour y lire un fichier multimédia),
- et/ou encore l'accès à un terminal connecté au réseau local, par exemple pour piloter le fonctionnement de ce terminal (typiquement un équipement connecté au réseau local (chaine Hi-Fi, détecteur d'intrusion, installation de chauffage, terminal décodeur de télévision (dit « set-top box »), etc.) dont le fonctionnement peut être commandé depuis un terminal (de type Smartphone ou tablette) relié au réseau local),
- et/ou encore l'accès à un réseau étendu (typiquement Internet) en utilisant par exemple le premier terminal comme passerelle entre le réseau local et le réseau étendu.

Ainsi, dans une réalisation, le premier terminal précité est une passerelle entre le réseau local et un réseau étendu, par exemple une passerelle domestique (de type « box ») entre le réseau local Wifi domestique et l'Internet. Néanmoins, en variante, le premier terminal peut être un Smartphone ou une tablette jouant par exemple le rôle de point d'accès au réseau local pour un terminal visiteur. Ainsi, le terminal de confiance (deuxième terminal précité) est habilité à donner une réponse favorable ou non à la requête du terminal visiteur, requête que lui transmet le premier terminal.

Typiquement dans le cas où le premier terminal est une passerelle (notamment une passerelle domestique) dépourvue d'interface homme/machine telle qu'un écran d'affichage par exemple, il est alors convenant d'utiliser le deuxième terminal (le terminal de confiance, précité) pour utiliser son interface homme/machine à cette fin.

Ainsi, dans une forme de réalisation, la réception du message auprès du deuxième terminal, de confiance, provoque le lancement d'une application d'interface homme/machine sollicitant l'entrée, par l'utilisateur du deuxième terminal, d'une information de validation ou de refus de la requête.

On comprendra ainsi que cette forme de réalisation permet avantageusement de notifier toute requête d'accès, à l'utilisateur habilité à accorder ou refuser les requêtes de terminaux visiteurs. L'utilisateur habilité peut alors refuser une requête ou simplement ne pas y répondre, ou au contraire marquer son accord explicitement.

Ainsi, dans une forme de réalisation, sur absence de réception du deuxième message (par exemple après une temporisation prédéterminée auprès du premier terminal), ou sur réception d'un message de retour, issu du deuxième terminal et comportant au moins une information de refus de la requête, le premier terminal refuse au terminal visiteur l'accès à l'application requise sur le réseau local.

Dans une réalisation, le premier message peut comporter un identifiant du terminal visiteur (par exemple un numéro d'abonné, ou le nom de l'utilisateur du terminal visiteur ou son « pseudo » (ou « nickname »)), et l'application d'interface homme/machine indique cet identifiant à l'utilisateur du deuxième terminal. Cette réalisation est toutefois optionnelle, car le réseau local, par exemple un réseau sans fil (type Wifi, ou encore Zigbee^{®} ou autre), est de courte portée et l'utilisateur habilité, s'il voit l'utilisateur du terminal invité formuler sa requête, peut naturellement lui accorder ou non la requête sans avoir besoin d'être informé de son identité.

En cas de refus de la requête du terminal visiteur ou en attendant la réponse du terminal de confiance, le premier terminal peut donner accès au terminal visiteur à un portail captif (par exemple une redirection du terminal visiteur vers un serveur du premier terminal par exemple lorsque ce dernier est une passerelle, vers une page de « garage » indiquant que l'utilisateur habilité doit autoriser l'accès à l'application requise). Plus généralement, on comprendra que l'accès au réseau local peut être donné à un terminal visiteur (un Wifi « public » par exemple, permettant de rediriger les terminaux visiteurs vers un portail captif), mais l'accès à des applications prédéterminées du réseau local (obtenir des fichiers de terminaux du réseau local ou encore accéder à Internet via la passerelle du réseau local) est soumis à la validation de l'utilisateur habilité.

En effet, dans une forme de réalisation, l'accès précité à au moins une application sur le réseau local peut comporter au moins l'un des éléments parmi :
- un accès à un terminal relié au réseau local (par exemple pour commander le fonctionnement d'un équipement comportant ce terminal, tel qu'une chaîne Hi-Fi, une installation de chauffage, un décodeur set-top box, ou autre),
- un accès à des fichiers stockés en mémoire d'un terminal relié au réseau local, et
- un accès à un réseau étendu (par exemple Internet) via le premier terminal en tant que passerelle entre le réseau local et le réseau étendu.

Ainsi, le premier terminal, en cas de validation de la requête, peut limiter l'accès au réseau local pour le terminal visiteur à un choix prédéterminé de l'un de ces éléments ou d'une combinaison parmi ces éléments. Ce choix prédéterminé peut être effectué par l'utilisateur habilité et être défini dans le deuxième message, de retour, issu du terminal de confiance à disposition de l'utilisateur habilité.

De même, en cas de validation de la requête, le premier terminal peut donner accès au terminal visiteur pendant une durée prédéterminée seulement. Cette durée prédéterminée peut, là encore, être choisie par l'utilisateur habilité et être définie dans le deuxième message, de retour. En variante, elle peut être fixée à une durée donnée (stockée en mémoire du premier terminal) et l'autorisation de l'utilisateur habilité peut être redemandée à nouveau après cette durée.

Ainsi, l'interface homme/machine du terminal de confiance peut solliciter (outre l'autorisation d'accès) l'entrée d'un choix de l'utilisateur habilité quant à :
- une durée d'accès, et/ou
- l'un des éléments précités ou une combinaison de ces éléments.

L'utilisateur habilité est alors maître de l'utilisation par des visiteurs de son réseau. Il peut autoriser par exemple l'accès à Internet pour le temps de présence prévu du visiteur (une heure ou deux seulement par exemple). Il peut aussi autoriser définitivement et sans restriction un autre terminal qu'il vient d'acquérir. Dans ce cas, ce dernier terminal peut devenir aussi un terminal de confiance et être enregistré en tant que tel auprès du premier terminal.

L'invention vise aussi un terminal (tel que le premier terminal précité), comportant des moyens de traitement d'une requête d'accès à au moins une application disponible sur un réseau local, less moyens de traitement comportant un processeur et une unité de mémoire, ledit processeur étant configuré pour, en coopération avec une mémoire de travail de ladite unité de mémoire , la mise en œuvre du procédé ci-avant, l'unité de mémoire stockant au moins un identifiant de terminal de confiance.

La présente invention vise aussi le terminal de confiance, comportant des moyens de connexion à un réseau local prédéterminé (animé typiquement par le premier terminal), un processeur coopérant avec une mémoire de travail, ledit processeur et ladite mémoire de travail étant configurés pour lancer une application d'interface homme/machine sollicitant l'entrée, par un utilisateur du terminal, d'une information de validation ou de refus d'une requête d'accès par un terminal visiteur à au moins une application sur le réseau local, le processeur et la mémoire de travail étant configurés en outre pour la mise en œuvre du procédé selon cette forme de réalisation. L'application d'interface homme/machine peut solliciter en outre l'indication d'une durée et d'une application sur le réseau accordée au visiteur (ou d'une combinaison d'applications possibles).

La présente invention vise aussi un programme informatique comportant des instructions pour la mise en œuvre du procédé ci-avant, lorsque ce programme est exécuté par un processeur. Des instructions de ce programme peuvent être partagées entre les premier et deuxième terminaux, par exemple certaines exécutées par le premier terminal et d'autres, exécutées par le terminal de confiance.

D'autres caractéristiques et avantages de l'invention apparaîtront à l'examen de la description détaillée ci-après, et des dessins annexés sur lesquels :
- la figure 1 illustre un exemple de contexte de mise en œuvre du procédé selon l'invention ;
- la figure 2 illustre les étapes principales d'un exemple de procédé au sens de l'invention ;
- la figure 3 représente schématiquement un premier terminal au sens de l'invention ;
- la figure 4 représente schématiquement un deuxième terminal, de confiance, au sens de l'invention.

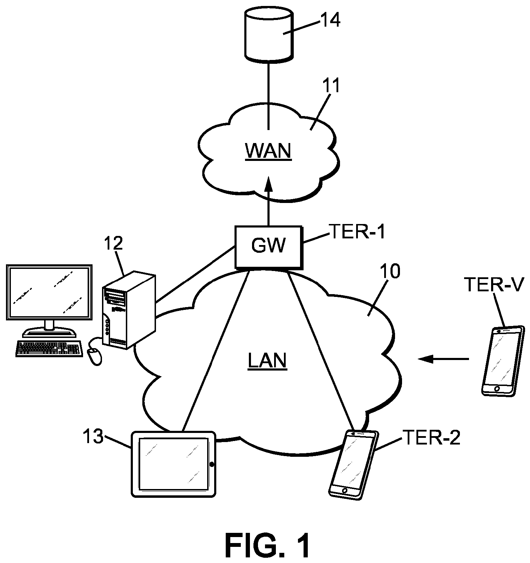

On se réfère à la figure 1 sur laquelle on a représenté une passerelle GW, en tant que premier terminal TER-1, entre un réseau local 10 et un réseau étendu 11 (typiquement l'Internet). Dans l'exemple représenté, plusieurs équipements tels qu'un ordinateur 12, une tablette 13 (ou en variante un téléviseur connecté), un Smartphone TER-2 sont reliés à la passerelle GW via le réseau local 10. Par exemple, la liaison de l'ordinateur 12 à la passerelle peut être filaire (câble Ethernet), tandis que la liaison de la tablette 13 ou du Smartphone TER-2 peuvent être sans fil par exemple via une liaison Wifi ou autre. On comprendra ainsi que le réseau local n'est pas limité à un mode de liaison particulier, filaire ou sans fil.

Un terminal visiteur TER-V souhaite se connecter au réseau local, pour accéder à une application sur le réseau (une connexion au réseau étendu 11, l'accès à l'un des équipements et/ou à la mémoire d'un tel équipement, etc.).

À titre d'exemple purement illustratif, l'ordinateur 12 peut stocker des fichiers personnels (fichiers multimédias, images ou vidéos personnelles, etc.) appartenant au propriétaire de la passerelle et des autres équipements qui sont reliés au réseau local. Dans ce cas, le propriétaire doit pouvoir contrôler strictement l'accessibilité à de tels fichiers. La tablette 13 (ou un téléviseur connecté) peut disposer d'un écran suffisamment grand et permettant d'afficher des photos ou vidéos que pourrait souhaiter projeter l'utilisateur du terminal visiteur. À cet effet, il doit prendre le contrôle de la tablette 13 via son terminal TER-V (par exemple un Smartphone) et via le réseau local 10. Néanmoins, là encore, pour accéder habituellement un réseau local, il doit obtenir une autorisation d'accès (avoir un identifiant de clé de sécurité Wifi typiquement) qui donne au terminal visiteur accès à tout le réseau local et à toutes les applications disponibles sur ce réseau local, et notamment accès à la mémoire des fichiers personnels de son propriétaire que stocke l'ordinateur 12.

Ainsi, la présente invention propose de hiérarchiser l'accessibilité d'un terminal visiteur TER-V aux applications d'un réseau local, en sollicitant l'autorisation du propriétaire du réseau. En particulier, la passerelle TER-1 envoie un message de demande d'accès aux applications, à un terminal de confiance TER-2 (deuxième terminal précité) à disposition du propriétaire. En réponse à ce message conditionne alors l'accès que donne la passerelle TER-1 aux applications du réseau local, pour le terminal visiteur TER-V.

On comprendra alors que dans un exemple de réalisation, la réception de ce message auprès du terminal de confiance TER-2 provoque le lancement d'une application d'interface homme/machine sollicitant l'accord du propriétaire du réseau pour valider la requête du terminal visiteur.

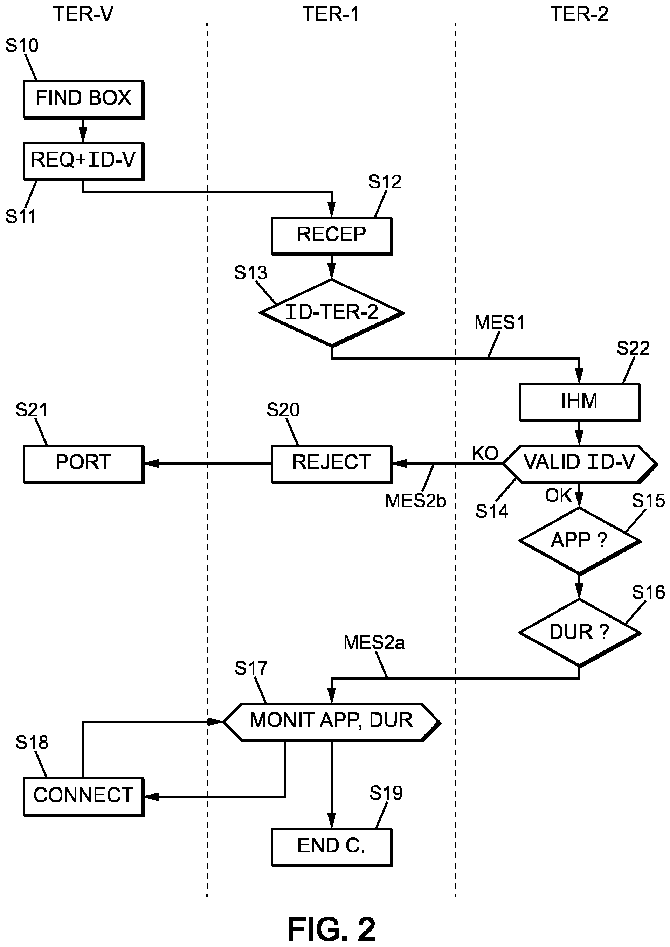

Ainsi, en référence maintenant à la figure 2, le terminal visiteur TER-V cherche à se connecter au réseau local et trouve, lors d'une première étape S10, la passerelle TER-1 parmi les points d'accès disponibles, par exemple via une liaison Wifi. L'utilisateur du terminal visiteur sélectionne cette passerelle TER-1 et formule une requête d'accès à une ou plusieurs applications du réseau local à l'étape S11. On comprendra ainsi que la passerelle autorise déjà une connexion Wifi, de type Wifi public pour recevoir la requête, et ce, même avant de donner accès à l'application requise sur le réseau local. Un identifiant du terminal visiteur TER-V (par exemple son adresse MAC) ou un pseudo de son utilisateur est ajouté à la requête pour être transmise avec cet identifiant ID-V à la passerelle TER-1, ainsi qu'un identifiant pour chaque application de la requête d'accès. Sur réception de cette requête par la passerelle à l'étape S12, la passerelle TER-1 vérifie à l'étape S13 dans une unité mémoire qu'elle comporte, s'il existe la référence d'un terminal de confiance, préenregistrée. Si tel est le cas, la passerelle TER-1 formule un premier message MES1 à destination de ce terminal de confiance TER-2. S'il existe plusieurs terminaux de confiance préenregistrés, la passerelle peut envoyer un premier message MES1 à chacun de ces terminaux. Elle déclenche ensuite une temporisation, pendant laquelle elle attend des messages de retour. Si aucun terminal n'a répondu pendant la durée de la temporisation, elle rejette la requête à l'étape S20 et le terminal visiteur est redirigé à l'étape S21vers un portail captif, indiquant par exemple l'échec de l'accès sans autorisation de l'utilisateur habilité. En variante, la passerelle peut diriger le terminal visiteur vers un portail captif d'un serveur sur le réseau étendu (référence 14 de la figure 1), présentant la page Web d'un fournisseur d'accès à un réseau Wifi urbain par exemple.

De son côté, le terminal de confiance TER-2, sur réception du premier message MES1 de la passerelle, lance l'application d'interface homme/machine à l'étape S22 qui affiche par exemple sur un écran du terminal TER-2 un message :
- indiquant par exemple que le terminal visiteur d'identifiant ID-V cherche à rejoindre le réseau local privé, et
- demandant à l'utilisateur du terminal de confiance TER-2 de valider ou refuser cette requête à l'étape S14, et en cas de validation :
   o d'indiquer à l'étape S15 pour quel type d'application sur le réseau local il peut être fait droit à cette requête, et
   ∘ d'indiquer en outre à l'étape S16 la durée pour laquelle l'accès à cette application est autorisé.

Si cet utilisateur habilité valide la requête à l'étape S14, le terminal de confiance TER-2 renvoie à la passerelle TER-1 un message de retour MES2a comportant des données quant à l'application autorisée sur le réseau local et la durée maximale de cette application. Le terminal visiteur TER-V peut alors à l'étape S18 se connecter au réseau local privé pour l'application autorisée et pendant une durée inférieure à la durée maximale autorisée. La passerelle surveille alors l'accès du terminal visiteur TER-V à cette application seulement et pour une durée inférieure à la durée maximale autorisée, à l'étape S17. Une fois la durée maximale écoulée, la passerelle TER-1 met fin, à l'étape S19, à la connexion du terminal visiteur TER-V au réseau local privé, et ne lui donne accès qu'au réseau local public.

Dans le cas où l'utilisateur habilité refuse la requête à l'étape S14, le terminal de confiance TER-2 formule un message de retour MES2b comportant l'information de refus. La passerelle TER-1, sur réception de ce message de refus MES2b, rejette la requête à l'étape S20. Comme indiqué précédemment, le terminal visiteur peut rester connecté au Wifi public qu'offre la passerelle pour être redirigé ensuite, à l'étape S21, vers le portail captif.

On comprendra ainsi que le terminal visiteur TER-V peut, de manière générale, accéder au réseau local mais uniquement pour dialoguer avec le premier terminal TER-1 et en particulier lui envoyer (éventuellement avec son identifiant ID-V) une requête d'accès à une ou plusieurs applications sur le réseau local (de telles applications sont en lien avec un réseau local « privé », par opposition à un réseau local « public » auquel le terminal visiteur peut accéder simplement pour formuler sa requête).

Dans un mode de réalisation supplémentaire, la passerelle TER-1 vérifie, sur réception de la requête d'accès à une ou plusieurs applications à l'étape S12, la disponibilité sur le réseau local de ces applications figurant dans la requête d'accès. Ainsi la passerelle TER-1 peut vérifier la disponibilité d'une connexion au réseau étendu 11, de l'accès à l'un des équipements et/ou à la mémoire d'un tel équipement, etc. La disponibilité peut être liée à l'accessibilité depuis le réseau local d'une telle application (si l'application est par exemple indisponible périodiquement) ou bien à une configuration préalable du propriétaire du réseau qui peut rendre ou non disponible, c'est-à-dire accessible, telle ou telle application. La configuration peut être réalisée par l'intermédiaire d'une interface homme/machine permettant des règles d'accès ou de disponibilité propres à chaque application.

Ainsi, le premier message MES1 transmis au terminal de confiance TER-2 comporte au moins une information de requête d'accès à la une ou plusieurs applications disponibles sur le réseau local. Ce mode de réalisation permet de déterminer dynamiquement les applications disponibles au moment de la requête d'accès du terminal visiteur TER-V. La passerelle pousse alors le lancement d'une application IHM (pour interface homme/machine) vers le terminal de confiance qui ne présentera que les applications disponibles, c'est-à-dire potentiellement accessibles, au moment de la requête du terminal visiteur. La liste des applications apparaissant sur le terminal de confiance peut ainsi être plus courte que celle dans la requête initiale d'accès à l'étape S11 si au moins une des applications n'est pas disponible sur le réseau local. On évite ainsi de donner accès à des applications qui ne seraient pas disponibles, comme par exemple pas en ligne sur le réseau local, pour diverses raisons à un moment donné, mais dont l'accès pourrait être accordé pour une connexion ultérieure, lors d'un retour de la disponibilité.

Dans un mode de réalisation alternatif, la passerelle TER-1 vérifie, sur réception de la requête d'accès à une ou plusieurs applications à l'étape S12, l'historique des requêtes accordées ou non au terminal visiteur, en utilisant son identifiant ID-V. Ainsi, le premier message MES1 transmis au terminal de confiance TER-2 comporte au moins une information de requête d'accès à la une ou plusieurs applications sur le réseau local ainsi qu'une information sur l'historique des requêtes d'accès au terminal visiteur et des réponses qui y ont été données. Une telle information aide notamment l'utilisateur du terminal de confiance à prendre la décision de valider ou non la requête ainsi reçue.

Des exemples d'applications possibles de l'invention sont détaillés ci-après à titre illustratif de ce qui précède.

Un terminal visiteur peut se connecter au réseau Wifi public, généré par la passerelle, et qui apparaît non sécurisé. Lorsque ce terminal visiteur tente de s'y attacher, la passerelle reçoit par exemple une adresse MAC du terminal visiteur ou un nom pour ce terminal (par exemple le nom que lui a donné son utilisateur, ou un « pseudo » de l'utilisateur).

La passerelle « pousse »alors le lancement d'une application d'IHM (pour « interface homme/machine ») vers le terminal de confiance, déclaré, du propriétaire de la passerelle. Le terminal de confiance TER-2 peut être déclaré dans les réglages initiaux de la passerelle (ou « settings »). Le terminal de confiance demande à son utilisateur une confirmation de l'autorisation.

Cette demande peut lui proposer par exemple de valider et renseigner les informations suivantes :
- validation de l'accès pour un terminal dont l'identifiant s'affiche et qui est à l'origine de la requête d'accès,
- renseigner le type d'accès autorisé : Internet, réseau local,
- renseigner la durée autorisée de l'accès.

La passerelle gère alors les autorisations en fonction des paramètres entrés par son propriétaire via son terminal de confiance.

Comme il s'agit d'un réseau local (de relativement courte portée), l'utilisateur du terminal visiteur peut être vu et connu du propriétaire de la passerelle (par exemple, un ami de passage qui souhaite accéder à Internet ou afficher des photos de son terminal sur la tablette ou le téléviseur du propriétaire).

La passerelle diffuse en Wifi deux réseaux, le réseau privé dédié au propriétaire de la passerelle et un réseau ouvert, public, dédié aux visiteurs.

Le propriétaire a déjà un terminal associé au réseau privé sur lequel il a installé l'application de contrôle de la passerelle et en particulier l'application d'IHM associée.

Lorsque le visiteur souhaite par exemple accéder à Internet par l'intermédiaire de la passerelle, il se connecte sur le Wifi Invité non sécurisé (public), sans saisie de clé. Le terminal ainsi connecté n'accède qu'à une page « garage » (par exemple au portail captif de la passerelle) dans laquelle il lui est indiqué que le propriétaire, administrateur de la passerelle, doit l'autoriser pour qu'il puisse accéder à Internet. Sans cette autorisation, il n'a ni accès libre à Internet, ni accès au réseau local privé.

L'administrateur de la passerelle peut à tout moment consulter la liste des terminaux invités qui demandent à accéder à son réseau privé. Il peut alors autoriser ou non l'accès à tout ou partie de son réseau domestique ainsi qu'à Internet et en définir la durée.

L'administrateur peut à tout moment révoquer un terminal invité ou modifier les droits d'accès aux réseaux.

L'utilisateur invité n'a pas besoin de saisir de clé de sécurité Wifi. Le propriétaire de la passerelle maîtrise l'usage fait de son accès Internet et sur son réseau local.

Ainsi par exemple, dans un premier cas d'usage, un ami, de passage chez un propriétaire de la passerelle souhaite accéder à Internet simplement. Le propriétaire ne souhaite pas lui donner un accès permanent et non contrôlé. L'ami invité sélectionne sur son terminal le point d'accès au réseau Invité (« Livebox-1234-Invité » par exemple), correspondant à la passerelle. Le propriétaire de la passerelle valide la demande de connexion via une application et précise la durée de l'autorisation (de quinze minutes à vingt-quatre heures par exemple) ainsi que le type d'accès : Internet uniquement.

Dans un deuxième cas d'usage, un ami, de passage chez un propriétaire de la passerelle souhaite diffuser simplement ses photos stockées sur son terminal, sur la télévision du propriétaire de la passerelle. Le propriétaire ne souhaite pas lui donner un accès permanent et non contrôlé. L'ami sélectionne sur son terminal le point d'accès au réseau Invité. Le propriétaire du point d'accès valide la demande de connexion et précise la durée de l'autorisation ainsi que le type d'accès : Réseau Local uniquement.

Dans un troisième cas d'usage, l'invité souhaite se connecter à Internet pour accéder à de la musique stockée dans le Cloud (accessible via le réseau Internet11) et la jouer simplement sur une enceinte Wifi du réseau local. Le propriétaire de la passerelle valide la demande de connexion et précise la durée de l'autorisation ainsi que le type d'accès : Internet et Réseau Local.

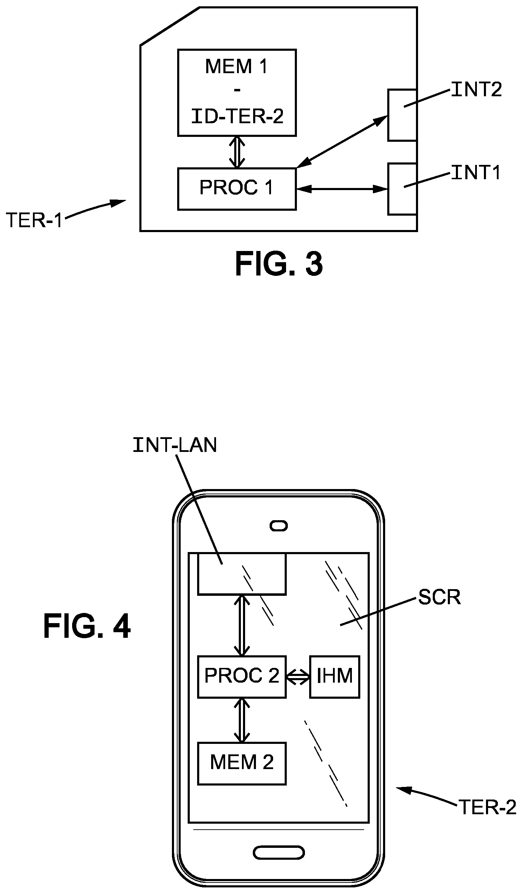

La présente invention vise aussi le premier terminal précité TER-1 qui, dans l'exemple représenté sur la figure 3, est une passerelle pour la mise en œuvre de l'invention, et comporte une unité mémoire MEM1 stockant au moins un identifiant de terminal de confiance ID-TER2, auquel adresser le premier message précité MES1. Le premier terminal TER-1 comporte en outre un processeur PROC1 coopérant avec une mémoire de travail de l'unité mémoire MEM1, et capable de piloter en outre les interfaces de communication INT1 avec le réseau local et INT2 avec le réseau étendu. Le processeur, en coopération avec la mémoire de travail, peut exécuter les étapes S12, S13, S20, S17, S19 de la figure 2 présentée ci-avant, lorsqu'il exécute des instructions d'un programme informatique que vise aussi la présente invention.

La présente invention vise aussi le deuxième terminal précité TER-2, de confiance, qui, dans l'exemple représenté sur la figure 4 comporte un processeur PROC2 coopérant avec une mémoire de travail MEM2.Cette coopération permet notamment de lancer l'application d'interface homme/machine (module IHM) pour afficher, par exemple sur l'écran SCR que comporte le terminal TER-2, une notification indiquant qu'un terminal visiteur requiert l'accès à une application sur le réseau local. La notification demande alors une autorisation pour cette requête (ainsi par exemple que la durée et/ou le type d'application autorisée). Le processeur PROC2 pilote en outre l'interface de communication INT-LAN pour envoyer un message de réponse comportant l'information d'autorisation ou de refus de l'utilisateur du terminal TER-2 (ainsi que la durée et/ou le type d'application autorisée).Le processeur, en coopération avec la mémoire de travail, peut exécuter les étapes S22, S14, S15, S16 de la figure 2 présentée ci-avant, lorsqu'il exécute des instructions d'un programme informatique que vise aussi la présente invention.

## Revendications

1. Procédé mis en œuvre par des moyens informatiques, de traitement d'une requête d'accès à une ou plusieurs applications disponibles sur un réseau local, dans lequel :
- un premier terminal est adapté pour donner accès au réseau local à un terminal visiteur émettant une requête d'accès à au moins une application sur le réseau local, le premier terminal étant une passerelle entre le réseau local et un réseau étendu,
- le premier terminal étant relié via le réseau local à un deuxième terminal, de confiance, à disposition d'un utilisateur habilité à donner une autorisation d'accès à ladite au moins une application,
- le deuxième terminal étant identifié par le premier terminal comme ayant des droits pour valider ou refuser une requête d'accès d'un terminal visiteur,
le procédé comprenant les étapes mises en œuvre par le premier terminal, suite à l'accès d'un terminal visiteur à un portail captif de la passerelle auquel lui donne accès le premier terminal :
- sur réception d'une requête d'accès à une application ou à plusieurs applications sur le réseau local, ladite requête d'accès comprenant un identifiant pour chaque application parmi ladite application ou lesdites plusieurs applications, le premier terminal vérifie la disponibilité de ladite application ou desdites plusieurs applications,
- transmet au deuxième terminal un premier message comportant au moins une information de requête d'accès à ladite application ou auxdites plusieurs applications figurant dans la requête d'accès et étant disponibles sur le réseau local, et
- conditionne l'accès du terminal visiteur à ladite application ou auxdites plusieurs applications requises sur le réseau local, à la réception d'un deuxième message, de retour, issu du deuxième terminal et comportant une information de validation de la requête d'accès, des données quant à au moins une application autorisée et la durée pour laquelle l'accès à ladite au moins une application autorisée est autorisé.

2. Procédé selon la revendication 1, dans lequel, sur absence de réception du deuxième message, ou sur réception d'un message de retour, issu du deuxième terminal et comportant au moins une information de refus de la requête d'accès, le premier terminal refuse au terminal visiteur l'accès à ladite application ou auxdites plusieurs applications requises sur le réseau local.

3. Procédé selon la revendication 1 ou 2, dans lequel, en cas de refus de la requête du terminal visiteur, le premier terminal donne accès au terminal visiteur au portail captif.

4. Procédé selon l'une des revendications précédentes, dans lequel la réception du message auprès du deuxième terminal, de confiance, provoque le lancement d'une application d'interface homme/machine sollicitant l'entrée, par l'utilisateur du deuxième terminal, d'une information de validation ou de refus de la requête.

5. Procédé selon la revendication 4, dans lequel le premier message comporte un identifiant du terminal visiteur, et l'application d'interface homme/machine indique ledit identifiant à l'utilisateur du deuxième terminal.

6. Procédé selon l'une des revendications précédentes, dans lequel ledit accès à une application ou plusieurs applications sur le réseau local comporte au moins l'un des éléments parmi :
- un accès à un terminal relié au réseau local,
- un accès à des fichiers stockés en mémoire d'un terminal relié au réseau local, et
- un accès à un réseau étendu via le premier terminal en tant que passerelle entre le réseau local et le réseau étendu.

7. Procédé selon la revendication 6, dans lequel le premier terminal, en cas de validation de la requête, limite l'accès au réseau local pour le terminal visiteur à un choix prédéterminé de l'un desdits éléments ou d'une combinaison parmi lesdits éléments.

8. Procédé selon la revendication 7, dans lequel le choix prédéterminé est défini dans le deuxième message, de retour.

9. Procédé selon l'une des revendications 4 et 5, prise en combinaison avec l'une des revendications 7 et 10, dans lequel l'interface homme/machine sollicite en outre l'entrée d'un choix de l'utilisateur du deuxième terminal, d'une durée d'accès et/ou de l'un desdits éléments ou d'une combinaison d'éléments.

10. Terminal, comportant des moyens de traitement d'une requête d'accès à au moins une application disponible sur un réseau local, lesdits moyens de traitement comportant un processeur (PROC 1) et une unité de mémoire (MEM1), ledit processeur (PROC 1) étant configuré pour, en coopération avec une mémoire de travail de ladite unité de mémoire (MEM1), la mise en œuvre des étapes réalisées par le premier terminal dans le procédé selon l'une des revendications précédentes, ladite unité de mémoire stockant au moins un identifiant d'un terminal de confiance relié au terminal via le réseau local.

11. Système comprenant le terminal selon la revendication 10 ainsi qu'un terminal de confiance, comportant des moyens de connexion à un réseau local prédéterminé, un processeur (PROC2) coopérant avec une mémoire de travail (MEM2) , ledit processeur et ladite mémoire de travail étant configurés pour lancer une application d'interface homme/machine sollicitant l'entrée, par un utilisateur du terminal de confiance, d'une information de validation ou de refus d'une requête d'accès par un terminal visiteur à au moins une application sur le réseau local, ledit processeur et ladite mémoire de travail étant configurés en outre pour la mise en œuvre des étapes réalisées par le deuxième terminal dans le procédé selon l'une des revendications 4, 5 et 9.

12. Programme informatique **caractérisé en ce qu'**il comporte des instructions pour la mise en œuvre du procédé selon l'une des revendications 1 à 9, lorsque ce programme est exécuté par au moins deux processeurs.

## Patentansprüche

1. Verfahren, das durch Computermittel implementiert wird, zum Verarbeiten einer Anforderung des Zugriffs auf eine oder mehrere Anwendungen, die in einem lokalen Netzwerk verfügbar sind, bei dem:
- ein erstes Endgerät dazu geeignet ist, einem Besucherendgerät, das eine Anforderung des Zugriffs auf mindestens eine Anwendung in dem lokalen Netzwerk sendet, Zugriff auf das lokale Netzwerk zu gewähren, wobei das erste Endgerät ein Gateway zwischen dem lokalen Netzwerk und einem Weitverkehrsnetzwerk ist;
- wobei das erste Endgerät über das lokale Netzwerk mit einem, vertrauenswürdigen, zweiten Endgerät verbunden ist, das einem Benutzer zur Verfügung steht, der befähigt ist, eine Autorisierung des Zugriffs auf die mindestens eine Anwendung zu erteilen,
- wobei das zweite Endgerät durch das erste Endgerät als mit Rechten ausgestattet, eine Anforderung des Zugriffs eines Besucherendgeräts zu bestätigen oder abzulehnen, identifiziert wird,
wobei das Verfahren die von dem ersten Endgerät implementierten Schritte, nach dem Zugriff eines Besucherendgeräts auf ein Captive-Portal des Gateways, auf das ihm das erste Endgerät Zugriff erteilt, umfasst:
- beim Empfangen einer Anforderung des Zugriffs auf eine Anwendung oder auf mehrere Anwendungen in dem lokalen Netzwerk, wobei die Zugriffsanforderung eine Kennung für jede Anwendung unter der Anwendung oder den mehreren Anwendungen umfasst, überprüft das erste Endgerät die Verfügbarkeit der Anwendung oder der mehreren Anwendungen,
- überträgt an das zweite Endgerät eine erste Nachricht, die mindestens eine Information einer Zugriffsanforderung auf die Anwendung oder auf die mehreren Anwendungen beinhaltet, die in der Zugriffsanforderung erscheinen und in dem lokalen Netzwerk verfügbar sind, und
- knüpft den Zugriff des Besucherendgeräts auf die Anwendung oder auf die mehreren Anwendungen, die in dem lokalen Netzwerk angefordert werden, an das Empfangen einer zweiten Nachricht, einer Rücknachricht, die von dem zweiten Endgerät stammt und eine Information zur Bestätigung der Zugriffsanforderung, Daten zu mindestens einer autorisierten Anwendung und die Dauer, für die der Zugriff auf die mindestens eine autorisierte Anwendung autorisiert wird, beinhaltet.

2. Verfahren nach Anspruch 1, bei dem das erste Endgerät beim Nichtempfangen der zweiten Nachricht oder beim Empfangen einer Rücknachricht, die von dem zweiten Endgerät stammt und mindestens eine Information zur Ablehnung der Zugriffsanforderung beinhaltet, dem Besucherendgerät den Zugriff auf die Anwendung oder die mehreren Anwendungen, die in dem lokalen Netzwerk angefordert werden, verweigert.

3. Verfahren nach Anspruch 1 oder 2, bei dem das erste Endgerät dem Besucherendgerät im Fall einer Ablehnung der Anforderung des Besucherendgeräts Zugriff auf das Captive Portal gewährt.

4. Verfahren nach einem der vorhergehenden Ansprüche, bei dem das Empfangen der Nachricht bei dem, vertrauenswürdigen, zweiten Endgerät das Starten einer Mensch/Maschine-Schnittstellenanwendung bewirkt, die zum Eingeben einer Informationen zur Bestätigung oder Ablehnung der Anforderung durch den Benutzer des zweiten Endgeräts auffordert.

5. Verfahren nach Anspruch 4, bei dem die erste Nachricht eine Kennung des Besucherendgeräts beinhaltet und die Mensch/Maschine-Schnittstellenanwendung dem Benutzer des zweiten Endgeräts die Kennung angibt.

6. Verfahren nach einem der vorhergehenden Ansprüche, bei dem der Zugriff auf eine Anwendung oder mehrere Anwendungen in dem lokalen Netzwerk mindestens eines der folgenden Elemente umfasst:
- einen Zugriff auf ein mit dem lokalen Netzwerk verbundenes Endgerät,
- einen Zugriff auf Dateien, die im Speicher eines mit dem lokalen Netzwerk verbundenen Endgeräts gespeichert sind, und
- einen Zugriff auf ein Weitverkehrsnetzwerk über das erste Endgerät als Gateway zwischen dem lokalen Netzwerk und dem Weitverkehrsnetzwerk.

7. Verfahren nach Anspruch 6, bei dem das erste Endgerät im Fall einer Bestätigung der Anforderung, den Zugriff auf das lokale Netzwerk für das Besucherendgerät auf eine vorbestimmte Auswahl eines der Elemente oder einer Kombination unter den Elementen beschränkt.

8. Verfahren nach Anspruch 7, bei dem die vorbestimmte Auswahl in der zweiten Nachricht, der Rücknachricht, definiert ist.

9. Verfahren nach einem der Ansprüche 4 und 5 in Kombination mit einem der Ansprüche 7 und 10, bei dem die Mensch/Maschine-Schnittstelle ferner zum Eingeben einer Auswahl des Benutzers des zweiten Endgeräts, einer Zugriffsdauer und/oder eines der genannten Elemente oder einer Kombination von Elementen auffordert.

10. Endgerät, das Mittel zur Verarbeitung einer Anforderung des Zugriffs auf mindestens eine in einem lokalen Netzwerk verfügbare Anwendung beinhaltet, wobei die Mittel zur Verarbeitung einen Prozessor (PROC 1) und eine Speichereinheit (MEM1) umfassen, wobei der Prozessor (PROC 1) ausgelegt ist, im Zusammenwirken mit einem Arbeitsspeicher der Speichereinheit (MEM1), zur Implementierung der Schritte, die von dem ersten Endgerät bei dem Verfahren nach einem der vorhergehenden Ansprüche ausgeführt werden, wobei die Speichereinheit mindestens eine Kennung eines vertrauenswürdigen Endgeräts speichert, das mit dem Endgerät über das lokale Netzwerk verbunden ist.

11. System, umfassend das Endgerät nach Anspruch 10 sowie ein vertrauenswürdiges Endgerät, beinhaltend Mittel zum Verbinden mit einem vorbestimmten lokalen Netzwerk, einen Prozessor (PROC2), der mit einem Arbeitsspeicher (MEM2) zusammenwirkt, wobei der Prozessor und der Arbeitsspeicher dazu ausgelegt sind, eine Mensch/Maschine-Schnittstellenanwendung zu starten, die zum Eingeben, durch einen Benutzer des vertrauenswürdigen Endgeräts, einer Information zur Bestätigung oder Ablehnung einer Anforderung des Zugriffs durch ein Besucherendgerät auf mindestens eine Anwendung in dem lokalen Netzwerk auffordert, wobei der Prozessor und der Arbeitsspeicher ferner ausgelegt sind zur Implementierung der Schritte, die von dem zweiten Endgerät bei dem Verfahren nach einem der Ansprüche 4, 5 und 9 ausgeführt werden.

12. Computerprogramm, das Anweisungen beinhaltet, die bei der Ausführung dieses Programms durch mindestens zwei Prozessoren das Verfahren nach einem der Ansprüche 1 bis 9 implementieren.

## Claims

1. Computer-implemented method for processing a request for access to one or more applications available on a local area network, wherein:
- a first terminal is configured to give access to the local area network to a visitor terminal making a request for access to at least one application on the local area network, the first terminal being a gateway between the local area network and a wide area network,
- the first terminal being connected via the local area network to a trusted second terminal belonging to a user authorized to grant access to said at least one application,
- the second terminal being identified by the first terminal as having rights to accept or deny a request for access from a visitor terminal,
the method comprising the following steps implemented by the first terminal following access by a visitor terminal to a captive portal of the gateway, to which captive portal the first terminal grants the visitor terminal access:
- on receipt of a request for access to one or more applications on the local area network, said request for access containing one identifier for each application among said one or more applications, the first terminal verifies the availability of said one or more applications,
- transmits to the second terminal a first message containing at least one information item requesting access to said one or more applications that feature in the request for access and that are available on the local area network, and
- makes access of the visitor terminal to said one or more applications requested on the local area network conditional upon receipt, from the second terminal, of a response second message containing an information item validating the request for access, data on at least one authorized application and the length of time for which access to said at least one authorized application is authorized.

2. Method according to Claim 1, wherein, on failure to receive the second message, or on receipt, from the second terminal, of a response message containing at least one information item denying the request for access, the first terminal denies the visitor terminal access to said one or more applications requested on the local area network.

3. Method according to Claim 1 or 2, wherein, in case of denial of the request of the visitor terminal, the first terminal gives the visitor terminal access to the captive portal.

4. Method according to any of the preceding claims, wherein receipt of the message from the trusted second terminal causes launch of a human-machine-interface application demanding entry, by the user of the second terminal, of an information item accepting or denying the request.

5. Method according to Claim 4, wherein the first message contains an identifier of the visitor terminal, and the human-machine-interface application indicates said identifier to the user of the second terminal.

6. Method according to any of the preceding claims, wherein said access to one or more applications on the local area network comprises at least one element among:
- access to a terminal connected to the local area network,
- access to files stored in the memory of a terminal connected to the local area network, and
- access to a wide area network via the first terminal acting as gateway between the local area network and the wide area network.

7. Method according to Claim 6, wherein the first terminal, in case of acceptance of the request, limits access to the local area network by the visitor terminal to a predetermined selection of one of said elements or to a combination of said elements.

8. Method according to Claim 7, wherein the predetermined selection is defined in the response second message.

9. Method according to either of Claims 4 and 5, in combination with either of Claims 7 and 10, wherein the human-machine interface further demands entry of a selection, by the user of the second terminal, of a length of access and/or of one of said elements or of a combination of elements.

10. Terminal, comprising means for processing a request for access to at least one application available on a local area network, said processing means comprising a processor (PROC 1) and a memory unit (MEM1), said processor (PROC 1) being configured, in cooperation with a working memory of said memory unit (MEM1), to implement the steps carried out by the first terminal in the method according to any of the preceding claims, said memory unit storing at least one identifier of a trusted terminal connected to the terminal via the local area network.

11. System comprising the terminal according to Claim 10 and a trusted terminal, comprising means for connecting to a predetermined local area network, and a processor (PROC2) cooperating with a working memory (MEM2), said processor and said working memory being configured to launch a human-machine-interface application which demands entry, by a user of the trusted terminal, of an information item accepting or denying a request for access by a visitor terminal to at least one application on the local area network, said processor and said working memory further being configured to implement the steps carried out by the second terminal in the method according to any of Claims 4, 5 and 9.

12. Computer program, **characterized in that** it comprises instructions for implementing the method according to any of Claims 1 to 9 when the program is executed by at least two processors.
